Europäisches Patentamt

European Patent Office

Office européen des brevets

(11) Veröffentlichungsnummer: **0 092 729**
A2

# (12) EUROPÄISCHE PATENTANMELDUNG

(21) Anmeldenummer: **83103491.3**

(22) Anmeldetag: **11.04.83**

(51) Int. Cl.³: **C 08 G 81/02**

(30) Priorität: **22.04.82 DE 3214979**

(43) Veröffentlichungstag der Anmeldung:
**02.11.83 Patentblatt 83/44**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbueschel 45**
**D-6730 Neustadt(DE)**

(72) Erfinder: **Hambrecht, Juergen, Dr.**
**Werderstrasse 30**
**D-6900 Heidelberg(DE)**

(72) Erfinder: **Werner, Michael, Dr.**
**Harzburger Weg 21**
**D-6800 Mannheim 33(DE)**

(72) Erfinder: **Ziegler, Walter, Dr.**
**Starenweg 15**
**D-6803 Edingen-Neckarhausen(DE)**

(54) **Verfahren zur Herstellung von Blockcopolymeren auf der Basis von Ethylenpolymerisaten und anderen Polymeren.**

(57) Die Erfindung betrifft ein Verfahren zur Herstellung von Blockcopolymeren auf der Basis von Ethylencopolymerisaten, die mindestens eine funktionelle Gruppe aus der Reihe der Carbonsäureanhydride einpolymerisiert enthalten und anderen Polymeren, wobei die Ethylencopolymerisate mit Polymeren umgesetzt werden, die mindestens eine funktionelle Gruppe aus der Reihe der Alkohole, Phenole, Amine und/oder Thiole aufweisen. Das Ethylencopolymerisat ist insbesondere ein Maleinsäureanhydrid enthaltendes Copolymerisat des Ethylens, die Polymeren haben insbesondere eine funktionelle Gruppe aus der Reihe der Alkohole, Phenole, Amine und oder Thiole. Das Polymere kann auch nur eine funktionelle Endgruppe aufweisen und ein Poly(carbonat), Poly(phenylenoxid), Poly(ester), Poly(amid), Poly-(ethylenglykolmonoester), Poly(propylenglykolmonoether) oder ein Poly(propylenglykolmonoester), insbesondere Poly(2,6-dimethylphenylenoxid), sein.

Verfahren zur Herstellung von Blockcopolymeren auf der Basis von Ethylenpolymerisaten und anderen Polymeren

Die Erfindung betrifft ein Verfahren zur Herstellung von Blockcopolymeren auf der Basis von Ethylencopolymerisaten, die mindestens eine funktionelle Gruppe aus der Reihe der Carbonsäureanhydride einpolymerisiert enthalten und anderen Polymeren.

Bei derartigen Blockcopolymeren handelt es sich um Polymere, in denen neben normalen Copolymeren, die aus Ethylen und einem mit Ethylen copolymerisierbaren Monomer aufgebaut sind, homo- oder copolymere Kettenabschnitte oder Blöcke anderer Monomerer enthalten sind.

Blockcopolymerisate auf der Basis von Ethylen sind aus der Literatur bekannt. Sie werden u.a. durch die radikalische Polymerisation verschiedener Monomerer in Gegenwart von Polyethylen hergestellt, wie es beispielsweise von Renfrew und Morgan in "Polythene" (1960), Seiten 373 bis 376, Verlag Iliffe & Sons Ltd, London, beschrieben ist.

Des weiteren kennt man Blockcopolymere auf der Basis von Ethylen mit Polyamiden, die durch die Umsetzung von nitrosierten Carbonamidgruppen enthaltenden Polyamiden erhalten werden (vgl. DE-PS 11 22 696).

Im Falle der Polyamide ist ein zusätzlicher Reaktionsschritt nötig. Bei der Herstellung der mit radikalisch polymerisierbaren Monomeren produzierbaren Blockpfropfcopolymeren werden recht heterogene Produkte erhalten. Des weiteren ist dieses Verfahren nur bei radikalisch polymerisierbaren Monomeren möglich.

Fre/P

Es ist auch schon vorgeschlagen worden, zur Herstellung von Blockcopolymeren auf der Basis von Ethylencopolymerisaten die Ethylencopolymerisate mit lebenden polymeren Anionen, erhalten aus ethylenisch ungesättigten, anionisch polymerisierbaren Monomeren, umzusetzen (vgl. DE-Patentanm. P 31 50 171). Bei diesem Verfahren muß stets unter Ausschluß von Luft und Feuchtigkeit in einem organischen Lösungsmittel gearbeitet werden.

Der Erfindung lag die Aufgabe zugrunde, ein einfaches Verfahren zur Herstellung von Blockcopolymeren auf der Basis von Ethylencopolymerisaten aufzufinden.

Diese Aufgabe wurde durch ein Verfahren gelöst, bei dem Ethylencopolymerisate mit Polymeren umgesetzt werden, die mindestens eine funktionelle Gruppe aus der Reihe der Alkohole, Phenole, Amine und/oder Thiole aufweisen.

Nach bevorzugter Verfahrensweise ist das Ethylencopolymerisat ein Maleinsäureanhydrid enthaltendes Copolymerisat des Ethylens.

Bevorzugt ist auch ein Verfahren, bei dem die Polymeren nur eine funktionelle Gruppe aus der Reihe der Alkohole, Phenole, Amine und/oder Thiole aufweisen.

Besonders bevorzugt ist ein Verfahren, bei dem die Polymeren je eine funktionelle Endgruppe aus der Reihe der Alkohole und Phenole aufweisen und ein Poly(carbonat), Poly(phenylenoxid), Poly(ester), Poly(amid), Poly(ethylenglykolmonoether), Poly(ethylenglykolmonoester), Poly(propylenglykolmonoether) oder ein Poly(propylenglykolmonoester), insbesondere aber Poly(2,6-dimethylphenylenoxid) sind.

0092729

Durch das Verfahren werden Blockcopolymere der allgemeinen Formel erhalten:

$[(A_n)_i (B_l)_k (Cm)_j]$, wobei A gleich Ethylen und ein mit Ethylen copolymerisierbares Monomeres aus der Reihe der (Meth)-Acrylate, der Vinylester, Vinylether, der ungesättigten Säuren, Nitrile, Amide, Halogene, Vinylsilane und Kohlenmonooxid, B ein mit Ethylen copolymerisierbares, eine Gruppe aus der Reihe der Carbonsäureanhydride tragendes Monomer, Cm ein Polymerrest eines Stammpolymeren, das mindestens eine funktionelle Gruppe aus der Reihe der Alkohole, Phenole, Amine und/oder Thiole trug, n und m eine ganze Zahl größer als 30, l, i, k und j eine ganze Zahl gleich oder größer als 1 und k.l gleich oder größer j ist. Bei A sind mindestens 30 Gew.%, vorzugsweise mindestens 50 Gew.% Ethylen. Ganz besonders ist Ethylen alleine bevorzugt. Bei den unter A verwendeten Comonomeren handelt es sich beispielsweise um Methylacrylat, Ethylacrylat, n-Butylacrylat, t-Butylacrylat, Ethylhexylacrylat, Laurylacrylat, Methylmethacrylat, Vinylacetat, Vinylpropionat, Vinylbutyrat, Methylvinylether, Acrylsäure, Acrylnitril, Acrylsäuredimethylamid, Vinylchlorid oder Kohlenmonoxid.

Bei B wird bevorzugterweise Maleinsäureanhydrid verwendet. Bei Cm handelt es sich um Polymerreste, die beispielsweise aus folgenden Stammpolymeren herrühren können: Polycarbonate, Polysulfone, Polyethersulfone, Polyether, Polyoximethylene, voll oder partiell verseifte Polyvinylacetate, um partiell oder nicht veretherte und/oder veresterte Cellulose, um Polymere mit Hydroxylgruppen aus der Reihe der Polybutadiene, Polyisoprene, Polystyrole, Polystyrolacrylnitrile, Poly(meth)acrylate, um Polyester, Polyurethane, Phenoplaste, Polyesteramide, Polyamide, Polyethylenimine und Polytetrahydrofuran. Als besonders geeignet werden Poly(carbonate), Poly-(phenylenoxide), Monoether

0092729

bzw. Monoester von Poly(ethylenglykol) und Poly(propylenglykol) und Poly(ester) angesehen. Ganz besonders bevorzugt ist Poly(2,6-dimethylphenylenoxid).

Derartige Polymere sind beispielsweise beschrieben in dem Handbuch "Ullmanns Encyclopädie der Technischen Chemie", Band. 19 (1980), Seiten 31 bis 38, 39 bis 88, 227 bis 264 und 297 bis 342 oder in "Journal Polymer Science" 40 (1959), Seite 399 , in "Industrial Engineering Chemistry" 51 (1959), Seite 147, in den US-Patentschriften 33 06 879, 39 14 266, 39 46 091, 40 28 341, 39 56 442 und 39 65 069; in den Deutschen Offenlegungsschriften 29 40 190, 29 36 977 und 30 16 386; in "Polymer Bulletin" 4 (1981), Seiten 343 bis 350 von O. Nuyken, M. Hofinger, in der Broschüre "Neue polymere Werkstoffe" 1969-1974, von H.G. Elias, Carl Hanser Verlag, München-Wien, (1975); im Lehrbuch "Polymer Chemistry" von B. Vollmert, Springer Verlag, Berlin-Heidelberg - New York (1973); im "Polymer Handbook", von I. Brandrup und E.H. Immergut (1975), Verlag John Wiley a. Sons, New York; und in Houben-Weyl, "Methoden der organischen Chemie", Band 14/2 (1963) Seiten 1 bis 636, Verlag Georg Thieme, Stuttgart.

Die erfindungsgemäß zu verwendenden Ethylenpolymerisate, die mindestens eine funktionelle Gruppe aus der Reihe der Carbonsäureanhydride enthalten, sind an sich bekannt (vgl. Renfrew u. Morgan, "Polythene", [1960], Seiten 345 bis 369, Verlag Iliffe & Sons Ltd. London oder Yocum u. Nyquist "Funktional Monomers 2" [1974], 424 - 425, Verlag Marcel Dekker, New York). Die Herstellung der Ethylenpolymerisate kann nach herkömmlichen Verfahren im Autoklaven und/oder rohrförmigen Polymerisationssystem bei Drücken von 150 bis 5000 bar und Temperaturen von 40 bis 450°C in Gegenwart radikalisch zerfallender Polymerisationsinitiatoren erfolgen (vgl. Ullmanns Encyclopädie der Technischen Chemie, Band 19, (1980), Seiten 167 bis 226).

Die Ethylencopolymerisate haben eine Dichte im Bereich von 0,910 bis 0,965, insbesondere 0,915 bis 0,960 g/cm$^3$. Die Schmelzindices der Ethylencopolymerisate, gemessen bei 190$^o$C und einem Auflagegewicht von 2,16 kp liegen oberhalb von 0,01 g/10 min. Die Ethylencopolymerisate weisen die allgemeine Formel: $[(A_n)_i (B_l)_k]$ auf, wobei A gleich Ethylen und gegebenenfalls ein mit Ethylen copolymerisierbares Monomeres aus der Reihe der (Meth)-Acrylate, der Vinylester, Vinylether, der ungesättigten Säuren, Nitrile, Amide, Halogene, Vinylsilane und CO, B ein mit Ethylen copolymerisierbares, eine Gruppe aus der Reihe der Carbonsäureanhydride tragendes Monomer, n eine ganze Zahl größer als 30, l, i und k eine ganze Zahl gleich oder größer als 1 ist. Die Zahlen für n und l entsprechen dem Polymerisationsgrad, die Zahlen für i und k der Blockanzahl im Copolymerisat.

Für das erfindungsgemäße Verfahren besonder geeignet sind Copolymerisate des Ethylens mit Maleinsäureanhydrid.

Nach dem erfindungsgemäßen Verfahren werden die oben beschriebenen Ethylencopolymerisate in Lösung oder in Schmelze, bevorzugt unter Sauerstoffausschluß, mit den Polymeren, die eine funktionelle Gruppe aus der Reihe der Alkohole, Phenole, Amine und/oder Thiole enthalten, umgesetzt. Die Umsetzung erfolgt dabei unter den üblichen Bedingungen, wie sie beispielsweise für die Herstellung von Estern, Amiden, Urethanen, Ethern und Thioethern in dem Lehrbuch "Organikum", VEB Deutscher Verlag der Wissenschaften, 1968, zitiert sind. Man kann aber auch in einem Zweiphasensystem in Gegenwart von Phasentransferkatalysatoren, wie quartären Ammonium-, Phosphonium- und tertiären Sulfonium-Verbindungen arbeiten. Die Umsetzung der Ethylencopolymerisate mit den funktionellen Gruppen enthaltenden Polymeren kann aber auch in der Schmelze erfol-

**0092729**

gen; die Mischung der Schmelzen wird dabei bevorzugt auf stark homogenisierenden Mischaggregaten, wie Extrudern oder Walzen, vorgenommen.

Die auf diesem Weg erhaltenen Blockcopolymerisate sind vom allgemeinen Typ $[(A_n)_i \ (B_l)_k \ (C_m)_j]$.

Die erfindungsgemäß erhaltenen Blockcopolymerisate sind Polymerisate mit einer Vielfalt von Eigenschaften und zeigen eine Reihe von Vorteilen gegenüber bisher bekannten Blockcopolymerisaten. Sie können auf herkömmlichen Maschinen durch Formblasen, Extrusion oder Spritzguß verarbeitet werden. Sie können alleine, insbesondere als Schmelzhaftkleber, als Mineralöladditive oder in Kombination mit anderen Thermoplasten zur Verbesserung der Zähigkeit, Fließeigenschaften und des Oberflächenbildes verwendet werden.

Die Erfindung wird anhand von Beispielen erläutert.

Beispiele

Als Ethylencopolymere fanden Produkte Verwendung, die nach dem Hochdruckprozeß in Autoklaven oder rohrförmigen Polymerisationssystemen erhalten wurden. Der Comonomeranteil, Dichte und Schmelzindex sind in der Tabelle aufgeführt.

Als Polymere, die mindestens eine funktionelle Gruppe aus der Reihe der Alkohole, Phenole, Amine, Thiole enthalten, wurden verwendet:

1. Poly(2,6-dimethylphenylenoxid) mit einer Grenzviskosität von 0,48 $\frac{dl}{g}$, gemessen in Chloroform bei 30°C.

2. Monooctylphenylether von Dihydroxipolyethylenglycol mit ca. 40 Ethylenoxideinheiten.

3. Monononylphenylether eines Copolymerisates aus Propylen- und Ethylenoxid mit ca. 50 Propylenoxid- und ca. 50 Ethylenoxideinheiten.

4. Polycarbonat auf der Basis von 2,2-Bis-(4-hydroxiphenyl)propan mit einer relativen Viskosität von 1,32 (gemessen an einer 0,5%igen Lösung in Methylenchlorid.

5. Polybutadien mit einer Hydroxylendgruppe mit einem mittleren Molekulargewicht von 10 000.

6. Polybutadien mit einer Thiolendgruppe mit einem mittleren Molekulargewicht von 5000.

7. Blockcopolymerisat aus Styrol/Butadien (70 Gew.Tle Styrol/30 Gew.Tle. Butadien) mit einer Hydroxylendgruppe mit einem mittleren Molekulargewicht von 12 000.

8. Polystyrol mit einer Hydroxylendgruppe mit einem mittleren Molekulargewicht von 16 000.

Herstellung der Blockcopolymerisate

Das Ethylencopolymerisat, das 8 Stunden bei 90°C im Vakuum bei 1 Torr getrocknet wurde, wurde in trockenem Ethylbenzol bei 80 bis 110°C unter Stickstoff gelöst.

Beispiele 1 bis 9

Zu der in der Tabelle angegebenen Menge an Ethylencopolymerisat (ca. 10%ig in Ethylbenzol) wurde unter Stickstoff die in der Tabelle angegebene Menge an Poly(2,6-dimethylphenylenoxid) (ca. 10%ig in Ethylbenzol) unter Rühren gegeben. Dazu fügte man 0,3 Gew.-Teile Perchlorsäure und rührte 1,5 Stdn. bei 90°C. Nach dem Abkühlen wurde das Reaktionsprodukt in Methanol ausgefällt, abgesaugt und bei 60°C im Vakuum bei 1 Torr getrocknet.

Zur Bestimmung des Umsatzes wurden 5 g des Blockcopolymerisats 5 Stunden bei 23°C in 100 ml Tetrahydrofuran (THF) gerührt. Man dekantierte und wiederholte den Vorgang noch zweimal. Dann wurde nach dem Abdampfen des Lösungsmittel der unlösliche Anteil bestimmt. Hieraus wurde der Umsatz folgendermaßen ermittelt:

$$\text{Umsatz} = \frac{100 \cdot A}{5}$$

A = unlöslicher Anteil.

Beispiele 10 bis 13

Zu der in der Tabelle angegebenen Menge an Ethylencopolymerisat (ca. 10%ig in Ethylbenzol) wurde unter Luftausschluß die in der Tabelle angegebene Menge an Monooctylphenylether von Dihydroxipolyethylenglycol bzw. Mononnonylphenylether eines Copolymerisates aus Propylen- und Ethylenoxid (ca. 20%ig in Ethylbenzol) unter Rühren gegeben. Dazu fügte man 0,3 Gew.-Teile Perchlorsäure und rührte 1,75 Stunden bei 80°C. Nach dem Abkühlen wurde das Reaktionsprodukt in Ethanol ausgefällt, zweimal mit Ethanol und einmal mit Methanol gewaschen und bei 60°C im Vakuum

bei 1 Torr getrocknet. Der Umsatz wurde folgendermaßen bestimmt:

$$Umsatz = \frac{A \cdot 100}{B}$$

B: Menge an Ethylencopolymerisat und an Ether von Dihydroxipolyethylenglycol bzw. von dem Copolymerisat des Propylen- und Ethylenoxid, die zur Reaktion gebracht werden [in/g]

A: Menge an gefälltem Produkt [in/g]

Beispiel 14

Zu der in der Tabelle angegebenen Menge an Ethylencopolymerisat (ca. 10%ig in Ethylbenzol) wurde unter Stickstoff die in der Tabelle angegebene Menge an Polycarbonat (ca. 10%ig in Chloroform) unter Rühren gegeben. Dazu gab man 0,1 Gew.-Teile Perchlorsäure und rührte 3 Stunden bei 65°C. Nach dem Abkühlen wurde das Reaktionsprodukt mit Methanol ausgefällt, abgesaugt und im Vakuum bei 60°C und 1 Torr getrocknet. Die Bestimmung des Umsatzes erfolgte wie in den Beispielen 1 bis 9 beschrieben mit der Abänderung, daß als Extraktionsmittel Chloroform verwendet wurde.

Beispiele 15 bis 18

Zu der in der Tabelle angegebenen Menge an Ethylencopolymerisat (ca. 10%ig in Ethylbenzol) wurde unter Stickstoff die in der Tabelle angegebene Menge an OH- bzw. SH-Endgruppen enthaltenden Polymeren (ca. 15%ig in Ethylbenzol) unter Rühren gegeben. Dazu fügte man 0,25 Gew.-Teile Perchlorsäure und rührte 3 Stunden bei 80°C. Nach dem Abkühlen wurde das Reaktionsprodukt in Methanol ausgefällt, abgesaugt und bei 60°C im Vakuum bei 1 Torr getrocknet.

Die Bestimmung des Umsatzes erfolgte wie in den Beispielen 1 bis 9 beschrieben.

### Beispiel 19

Zu 100 g Ethylencopolymerisat (ca. 10%ig in Ethylbenzol) wurden 100 g Poly(2,6-dimethylphenylenoxid) (ca. 10 % in Ethylenbenzol), 9 g 10%ige toluolische Lösung von Tricaprylmonoethylammoniumchlorid und 5,6 g einer 50%igen Natronlauge in Wasser unter Stickstoff zugegeben. Die Lösung wurde mit einem Ultraturax bei 50 bis 60°C homogenisiert. Man ließ 1 Stunde bei dieser Temperatur stehen und erhöhte die Temperatur dann auf ca. 100°C. Nach dem Abkühlen wurde das Polymerisat in Methanol ausgefällt, mit Methanol gewaschen, abfiltriert und im Vakuum bei 60°C und 1 Torr getrocknet.

Der Umsatz wurde wie in den Beispielen 1 bis 9 beschrieben bestimmt.

Die Ermittlung des Schmelzindex erfolgte bei 190°C und 2,16 kp nach DIN 53 735, die der Dichte nach DIN 53 479.

Tabelle

| Beispiele (erfindungsge-mäß) | Ethylencopolymerisat Comonomeres [Gew.%] | Dichte [g/cm$^3$] | Schmelzindex 190$^o$C/2,16 kp [g/10 min] | Gew.Tle. | Polymer mit funktioneller Gruppe Art | [Gew.Tle.] | Blockcopolymerisat Reaktions-temp. [$^o$C] | Reaktions-zeit [Std.] | Umsatz [%] |
|---|---|---|---|---|---|---|---|---|---|
| 1 | Maleinsäure-anhydrid | 1 | 0,922 | 0,7 | 100 | 1 | 20 | 90 | 1,5 | 95 |
| 2 | " | 1 | 0,922 | 0,7 | 100 | 1 | 100 | 90 | 1,5 | 87 |
| 3 | " | 1 | 0,922 | 0,7 | 100 | 1 | 60 | 90 | 1,5 | 92 |
| 4 | " | 1 | 0,922 | 0,7 | 100 | 1 | 80 | 90 | 1,5 | 91 |
| 5 | " | 3 | 0,926 | 0,7 | 100 | 1 | 210 | 90 | 1,5 | 83 |
| 6 | " | 3 | 0,926 | 0,7 | 100 | 1 | 300 | 90 | 1,5 | 82 |
| 7 | " | 8 | 0,926 | 3,3 | 100 | 1 | 200 | 90 | 1.5 | 89 |
| 8 | " | 8 | 0,926 | 3,3 | 160 | 1 | 400 | 90 | 1,5 | 90 |
| 9 | " | 8 | 0,926 | 3,3 | 160 | 1 | 600 | 90 | 1,5 | 87 |
| 10 | " | 1 | 0,918 | 0,3 | 200 | 2 | 4 | 80 | 1,75 | 75 |
| 11 | " | 1 | 0,918 | 0,3 | 200 | 2 | 10 | 80 | 1,75 | 79 |
| 12 | " | 1 | 0,918 | 0,3 | 200 | 3 | 50 | 80 | 1,75 | 80 |
| 13 | " | 1 | 0,925 | 40 | 200 | 3 | 75 | 80 | 1,75 | 83 |
| 14 | " | 1 | 0,922 | 0,7 | 200 | 4 | 120 | 65 | 3 | 71 |
| 15 | " | 1 | 0,922 | 0,7 | 100 | 5 | 20 | 80 | 3 | 82 |
| 16 | " | 1 | 0,922 | 0,7 | 100 | 6 | 50 | 80 | 3 | 73 |
| 17 | " | 1 | 0,922 | 0,7 | 100 | 7 | 100 | 80 | 3 | 79 |
| 18 | " | 1 | 0,922 | 0,7 | 100 | 8 | 100 | 80 | 3 | 75 |
| 19 | " | 1 | 0,918 | 0,3 | 100 | 1 | 100 | 23--100 | 1,5 | 98 |

**0092729**

Patentansprüche

1. Verfahren zur Herstellung von Blockcopolymeren auf der Basis von Ethylencopolymerisaten, die mindestens eine funktionelle Gruppe aus der Reihe der Carbonsäureanhydride einpolymerisiert enthalten und anderen Polymeren, dadurch gekennzeichnet, daß die Ethylencopolymerisate mit Polymeren umgesetzt werden, die mindestens eine funktionelle Gruppe aus der Reihe der Alkohole, Phenole, Amine und/oder Thiole aufweisen.

2. Verfahren nach Anspruch 1, dadurch gekennzeichnet, daß das Ethylencopolymerisat ein Maleinsäureanhydrid enthaltendes Copolymerisat des Ethylens ist.

3. Verfahren nach Anspruch 1, dadurch gekennzeichnet, daß die Polymeren nur eine funktionelle Gruppe aus der Reihe der Alkohole, Phenole, Amine und/oder Thiole aufweisen.

4. Verfahren nach Ansprüchen 1 und 3, dadurch gekennzeichnet, daß die Polymeren je eine funktionelle Endgruppe aus der Reihe der Alkohole und Phenole aufweisen und ein Poly(carbonat), Poly(phenylenoxid), Poly(ester), Poly(ethylenglykolmonoether), Poly(ethylenglykolmonoester), Poly(propylenglykolmonoether) oder ein Poly(propylenglykolmonoester) sind.

5. Verfahren nach Ansprüchen 1 und 4, dadurch gekennzeichnet, daß das Polymere Poly(2,6-dimethylphenylenoxid) ist.